# EUROPEAN PATENT APPLICATION

(11) **EP 2 770 384 A1**
(43) Date of publication of application: **27.08.2014**
(21) Application number: 13156360.3
(22) Date of filing: 22.02.2013
(51) Int. Cl.: G05B 19/042, G05B 23/02

(54) **Dynamically-configurable human-machine interface device**

(71) Applicant: Siemens Aktiengesellschaft, 80333 München (DE)
(72) Inventor: Chalapuradudi Bandigowda, Anandkumar, 560058 Bangalore (IN); Kulkarni, Shrinivas, 560085 Bangalore (IN); N, Aravind, Bangalore 560061 Karnataka (IN)

(57) **Abstract**

Dynamically-configurable human-machine interface device is disclosed. The dynamically-configurable human-machine interface device is communicatively coupled to at least one other human-machine interface device. One or more indicia corresponding to one or more logical control objects configured in the other human-machine interface device are selected on the dynamically-configurable human-machine interface device. One or more configuration objects corresponding to one or more selected indicia are retrieved from the other human-machine interface device. Finally, one or more logical control objects are instantiated on the dynamically-configurable human-machine interface device based on the retrieved configuration objects.

## Description

The present invention generally relates to automation systems incorporating multiple human-machine interface devices. More specifically, the present invention relates to a dynamically-configurable human-machine interface device suitable for use in such automation systems.

Industrial automation systems, and in particular, distributed automation systems, have special devices which provide an interface between an operator and the automation system. Such devices are generally referred to as human-machine interface devices.

In a process or discrete industry having a distributed automation system, human-machine interface devices are placed in different locations in an industrial plant. Generally, these human-machine interface devices are accessible by an operator. In practice, often a single operator is responsible for monitoring several such human-machine interface devices that are installed in the industrial plant. In the current scenario, an operator has to physically access individual human-machine interface devices for performing any task thereon. For example, when an alarm is generated by a human-machine interface device, an operator has to physically go to the human-machine interface device that generated an alarm to acknowledge the alarm.

As will be readily apparent, it is quite tedious and often, an impossible task for a single operator to satisfactorily monitor and control several human-machine interface devices installed at different locations within the industrial plant. The current solution is not only time consuming but is further disadvantageous in that the operator is often not able to attend to individual human-machine interface devices in a timely manner.

One of the solutions known from the state of the art is a thin client application resident on a remote terminal unit, which may be used to remotely connect to an individual human-machine interface device such that a monitoring or a control task may be performed. However, this requires the operator to have *a priori* information regarding which human-machine interface device requires a task to be performed thereon. Moreover, such solution is further disadvantageous in that it requires laborious log-in/log-out operations for routine monitoring of several human-machine interface devices without any reliability that individual human-machine interface devices are attended to in a timely manner.

In light of the foregoing, it is desirable to provide an improved automation system adapted for facilitating control and monitoring of multiple human-machine interface devices in an efficient and a reliable manner.

Accordingly, the object of the present invention is to provide a dynamically-configurable human-machine interface device suitable for use in an automation system such that multiple human-machine interface devices are controlled and monitored in an efficient and a reliable manner.

The object of the present invention is achieved by a dynamically-configurable human-machine interface device according to claim 1, a method for dynamically configuring a human-machine interface device according to claim 6, and an automation system according to claim 11. Further embodiments of the present invention are addressed in the dependent claims.

The underlying concept of the present invention is to provide a dynamically-configurable human-machine interface device that provides such technical features that a user of an automation system is able to scan through various logical control objects distributed across multiple human-machine interfaces in the automation system and select one or more of those logical control objects to be configured on the dynamically-configurable human-machine interface device. One or more configuration objects corresponding to the selected logical control objects are retrieved from the respective human-machine interface devices. Owing to the aforementioned technical features, a user is able to dynamically configure a human-machine interface device in a desirable manner.

In a first aspect of the present invention, a dynamically-configurable human-machine interface device suitable for use in an automation system is provided. The dynamically-configurable human-machine interface device is communicatively coupled to at least one other human-machine interface device in the automation system. The dynamically-configurable human-machine interface device comprises a designing module, a retrieving module, and a processing module. The designing module is configured for displaying one or more indicia corresponding to one or more logical control objects configured in the other human-machine interface device. The designing module is further configured for receiving a user input for selecting one or more of the indicia. The retrieving module is configured for retrieving one or more configuration objects from the other human-machine interface device corresponding to one or more selected indicia. Each configuration object comprises information related to a set of graphical and/or control properties of a corresponding logical control object. The processing module is configured for instantiating one or more logical control objects on the dynamically-configurable human-machine interface device based on the configuration objects.

In a second aspect of the present invention, a method for dynamically configuring a human-machine interface device suitable for use in an automation system is provided. The human-machine interface device is communicatively coupled to at least one other human-machine interface device. In a first step, one or more indicia corresponding to one or more logical control objects configured in the other human-machine interface device are displayed on the dynamically-configurable human-machine interface device, and further a user input for selecting one or more of the indicia is received. Subsequently, one or more configuration objects from the other human-machine interface device corresponding to one or more selected indicia are retrieved. Each configuration object comprises information related to a set of graphical and/or control properties of a corresponding logical control object. Finally, one or more logical control objects are instantiated on the human-machine interface device based on the configuration objects.

In a third aspect of the present invention, an automation system comprising a plurality of human-machine interface devices is provided. The plurality of human-machine interface devices comprises at least one dynamically-configurable human-machine interface device, the dynamically-configurable human-machine interface device being in accordance with the first aspect of the present invention, and further being operated in accordance with a method according to the second aspect of the present invention.

Accordingly, the present invention provides an improved automation system based on a dynamically-configurable human-machine interface device such that selected logical control objects distributed across multiple human-machine interface devices are controlled and monitored in an efficient and a reliable manner.

The present invention is further described hereinafter with reference to illustrated embodiments shown in the accompanying drawings, in which:
- FIG 1: illustrates a schematic view of an automation system in accordance with an embodiment of the present invention,
- FIG 2: illustrates a schematic view of a human-machine interface device in accordance with an embodiment of the present invention,
- FIG 3: illustrates a graphical user interface displaying a list of human-machine interface devices 106 in accordance with an embodiment of the present invention,
- FIG 4A-4C: illustrate a set of designing interfaces in accordance with an embodiment of the present invention,
- FIG 5: illustrates a dynamically configured graphical user interface in accordance with an embodiment of the present invention, and
- FIG 6: illustrates a method for dynamically configuring a human-machine interface device in accordance with the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

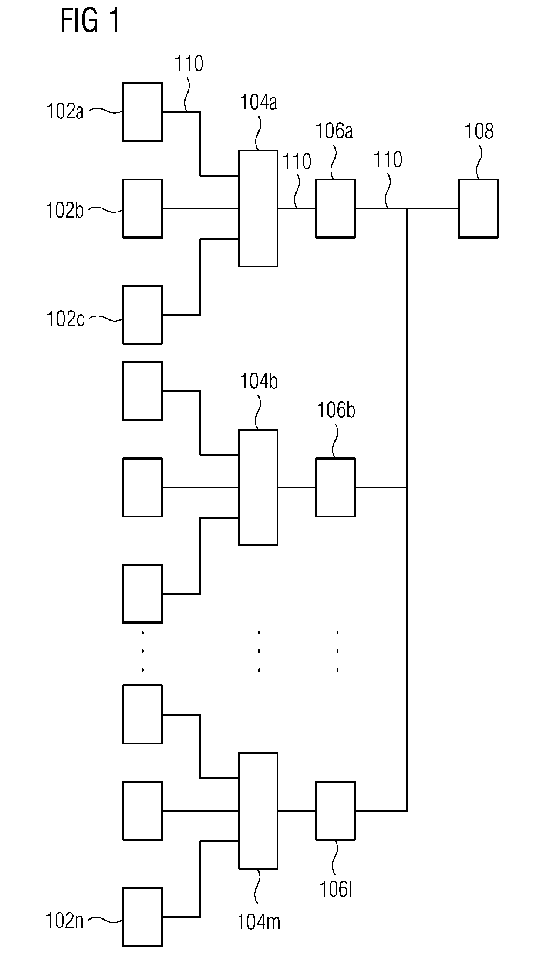

Referring to FIG 1, a schematic view of an automation system 100 is illustrated in accordance with an embodiment of the present invention.

The automation system 100 may be used in any industrial plant for monitoring and controlling a desired process. The automation system 100 includes a set of process devices 102a through 102n, a set of process controllers 104a through 104m, a set of human-machine interface devices 106a through 1061, and an engineering station 108.

Various examples of such industrial processes include, but are not limited to, food industry, automotive industry, and so forth. Accordingly, the process devices 102 may include a wide variety of operational components, such as electric motors, drives, valves, actuators, temperature/pressure sensors and so on.

The process controllers 104 are configured for monitoring and controlling the process devices 102 based on a control logic resident therein. In typical applications, the process controllers 104 are implemented using programmable logic controllers.

The human-machine interface devices 106 provide an interface to a user of the automation system 100. Typically, the human-machine interface devices 106 include a program code for displaying a set of graphical user interfaces to the user of the automation system 100. The human-machine interface devices 106 are configured to read/write data from/to memory (e.g. internal registers) of process controllers 104. In some applications, the human-machine interface devices 106 may simply perform the function of accessing and displaying data to the user of the automation system 100.

The engineering station 108 provides a development environment in which a set of logical control objects are designed and developed. Various examples of the logical control objects include, but are not limited to, trends, bars, buttons, and so on.

Subsequently, one or more configuration objects corresponding to each logical control object are bundled in a project file and downloaded to the human-machine interface devices 106. Each configuration object includes various graphical and/or control properties associated with a corresponding logical control object. Various graphical properties include information such as size, coordinates on screen, colour, aspect ratio, and so on. On the other hand, the control properties include information corresponding to input/output parameters, such as memory addresses to be read from and/or written to, and also a processing logic such as actions in response to events, altering graphical properties, such as change in colour based on a value exceeding a certain threshold, and so on.

All the components 102 through 108 discussed above are communicatively coupled to each other through a communication network 110. The interconnections between selective components as depicted in the adjoining figure are only exemplary. In general, direct communication between any two components is possible over the communication network 110 using suitable communication protocols as generally well known in the art.

In accordance with various exemplary embodiments of the present invention, at least one human-machine interface device 106 is dynamically configurable, as will now be explained hereinafter.

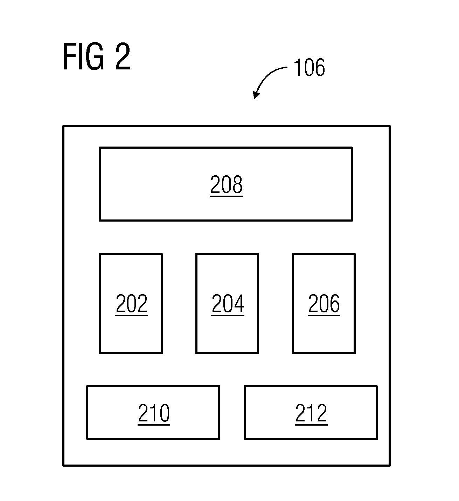

FIG 2 illustrates a schematic view of a human-machine interface device 106 in accordance with an embodiment of the present invention.

The present invention will now be explained in the context of a host human-machine interface device 106 and a remote human-machine interface device 106. While the host human-machine interface device 106 is necessarily a dynamically-configurable human-machine interface device in accordance with the teachings of the present invention, the remote human-machine interface device 106 may be a legacy human-machine interface device or a dynamically-configurable human-machine interface device.

The host human-machine interface device 106 includes a designing module 202, a retrieving module 204, and a processing module 206. In addition, the host human-machine interface device 106 also includes an interface module 208, a memory module 210, and a discovery module 212.

As explained in conjunction with the previous figure, various human-machine interface devices are coupled to the communication network 110. Hence, the host human-machine interface device 106 is communicatively coupled to the remote human-machine interface device 106 in the automation system 100.

The interface module 208 is configured for providing a display function. The interface module 208 further includes drivers for receiving a user input for example, through a touch screen, keypad and mouse, and so on.

The discovery module 212 is configured for scanning the automation system 100 and identifying other human-machine interface devices 106 in the automation system 100, and in particular, various remote human-machine interface devices 106. In an exemplary embodiment of the present invention, the human-machine interface device 106 scans the automation system 100 using the Discovery and Control Protocol (DCP). In general, any suitable device discovery protocol may be used to identify the other human-machine interface devices 106.

In general, the DCP discovers several different types of devices, such as the process controllers 104, the human-machine interface devices 106 and so on, typically included in the automation system 100. In a particularly advantageous aspect of the present invention, the discovery module 212 is configured to select only the remote human-machine interface devices 106 based on device type.

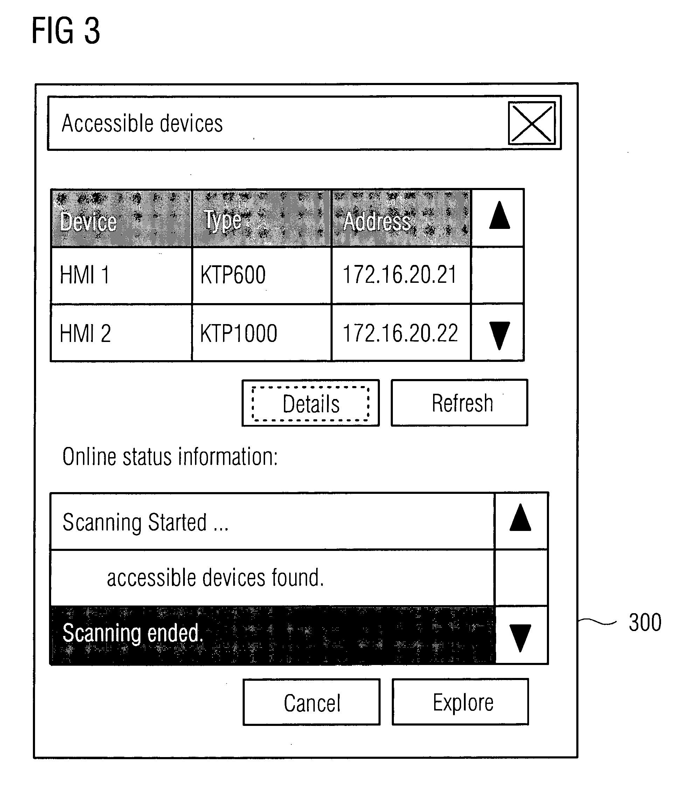

The resulting list of the remote human-machine interface devices 106 in the automation system 100 is displayed in a suitable graphical user interface to the user of the automation system 100. Thus, the designing module 202 provides a designing interface configured for selecting an individual remote human-machine interface device 106 from the list of remote human-machine interface devices 106. One exemplary such graphical user interface is illustrated in FIG 3.

Referring now to FIG 3, a designing interface 300 displaying a list of remote human-machine interface devices 106 is illustrated in accordance with an embodiment of the present invention.

The user can select any desired remote human-machine interface device 106 from the list and perform further functions.

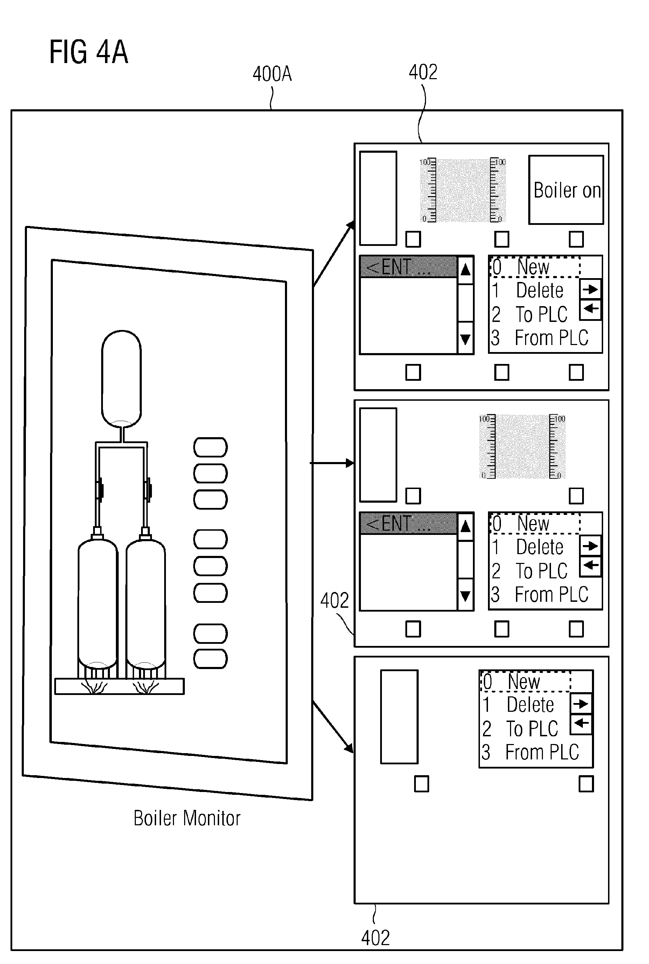

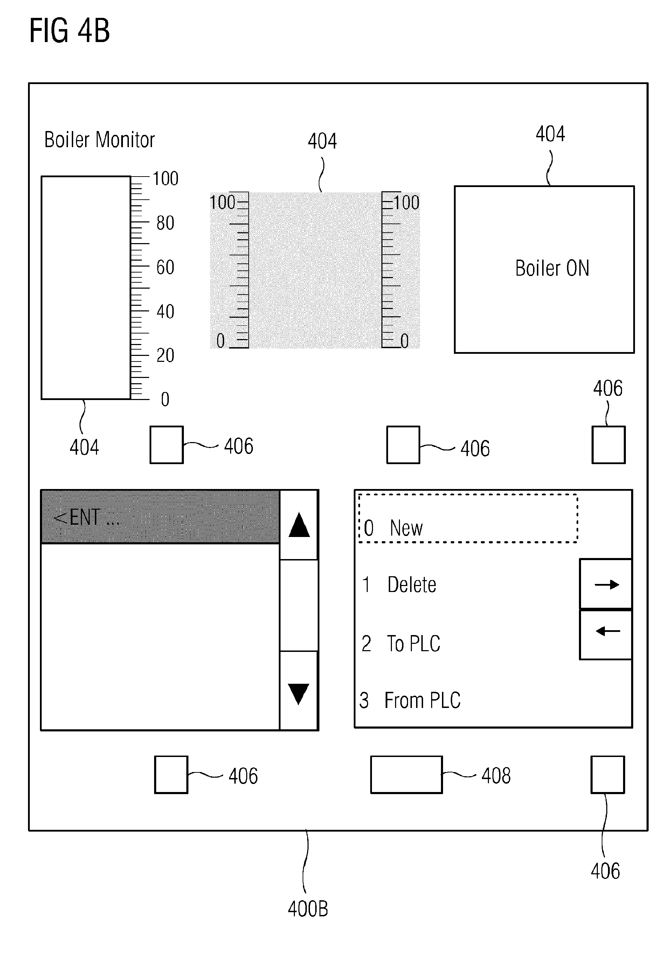

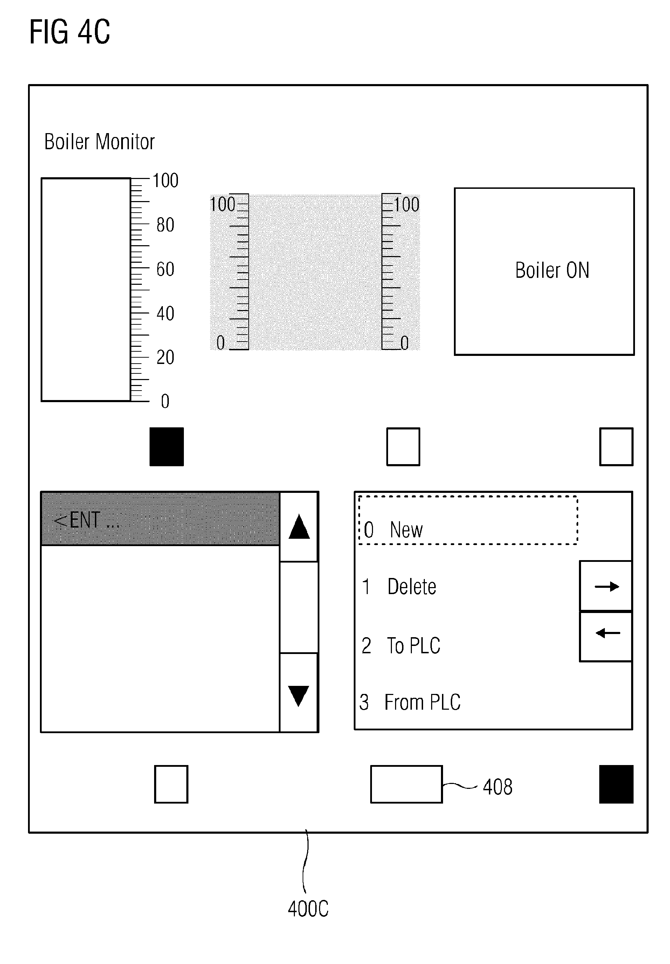

The designing module 202 is configured for selecting an individual graphical user interface from one or more graphical user interfaces configured in the individual remote human-machine interface device 106 based on corresponding user inputs such that one or more indicia corresponding to one or more logical control objects therein are displayed in a designing interface. The interaction between the user and the host human-machine interface device 106 during designing is schematically illustrated in FIGS 4A through 4C. The term 'indicia', as used herein, refers to any pictorial or textual representation of a desired entity such as a logical control objects, a graphical user interface and so on. Thus, the indicia may be pictorial icons, individual entries in a textual list, and so on.

Referring now to FIGS 4A through 4C, a set of designing interfaces 400A through 400C are illustrated in accordance with an embodiment of the present invention.

When the user selects a particular remote human-machine interface device 106 from the list, the user is redirected to the designing interface 400A which displays one or more graphical user interfaces 402 configured on that remote human-machine interface device 106.

The user can select an individual graphical user interface 402 from the list of graphical user interfaces 402 to explore one or more logical control objects corresponding thereto.

The designing module 202 subsequently displays a designing interface 400B which displays one or more indicia 404 corresponding to one or more logical control objects configured in the selected remote human-machine interface device 106. The designing module 202 is further configured for receiving a user input for selecting one or more of the indicia 404. In the exemplary embodiment depicted in the adjoining figure, each indicia 404 is associated with a check-box 406, the user can indicate selection of one or more indicia 404 through clicking in the corresponding check-boxes 406.

On selection of the one or more indicia 404, the designing module 202 further provides the designing interface 400C in which a button 408 is provided. The user can click on the button to indicate end of a selection operation.

Referring back to FIG 1, the retrieving module 204 is configured for retrieving one or more configuration objects from the remote human-machine interface devices 106 corresponding to one or more selected indicia 404. In one example, a remote procedure call is execute to retrieve the configuration objects from the remote human-machine interface device 106.

As explained in conjunction with FIG 1, each configuration object comprises information related to a set of graphical and/or control properties of a corresponding logical control object. The configuration objects, thus retrieved are stored in the memory module 210.

The processing module 206 is configured for instantiating one or more logical control objects on the host human-machine interface device 106 based on the configuration objects stored in the memory module 210 of the host human-machine interface device 106.

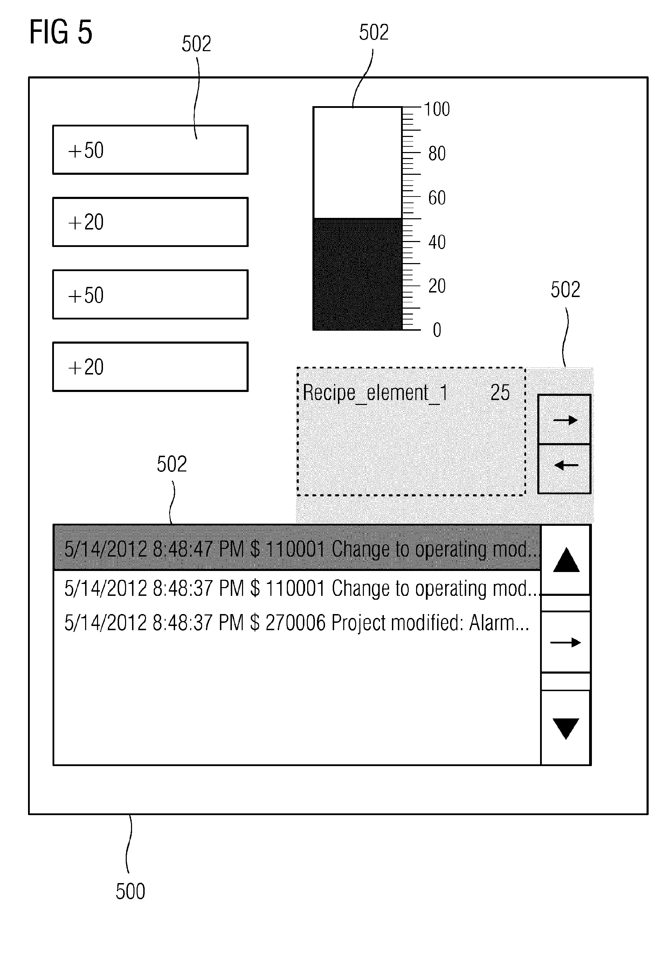

Once the logical control objects are instantiated, the host human-machine interface device 106 provides a graphical user interface 500, as depicted in FIG 5. The graphical user interface 500 includes instantiated logical control objects 502.

In accordance with an embodiment of the present invention, the designing module 202 is configured for permitting alteration of the set of graphical and/or control properties of the logical control objects in the host human-machine interface device 106 based on a corresponding user input. To achieve this, the user is able to trigger an alteration operation through suitable interaction with the host human-machine interface device 106. Subsequently, the user can view and manipulate any information included in one or more configuration objects on the host human-machine interface device 106 to alter graphical and/or control properties in a desirable manner.

In accordance with a further embodiment of the present invention, the designing module 202 is configured for permitting deletion of one or more logical control objects based on a corresponding user input. A deletion operation may be performed in a manner similar to an alteration operation except in this case, the user triggers a deletion operation, whereby various logical control objects are displayed and the user can select one or more logical control objects and perform a delete operation for the selected logical control objects.

It should be noted that several alternative implementations of the technical features of the present invention, as described above, will readily be apparent to a person ordinarily skilled in the art. For example, the indicia of the logical control objects may be providing using a simple list in textual format. Further, instead of navigating through logical control objects in individual graphical user interfaces, the indicia corresponding to all logical control objects in the remote human-machine interface device 106 may be displayed together. Similarly, the selection mechanism of indicia could be based on a drag-and-drop operation wherein instead of clicking on corresponding check-boxes; the user simply drags and drops the indicia from the designing interface 400B onto a blank graphical user interface template in the host human-machine interface device 106.

In a further advantageous aspect of the present invention, only the logical control objects corresponding to critical functions in the remote human-machine interface device 106 are displayed while dynamically configuring the host human-machine interface device 106.

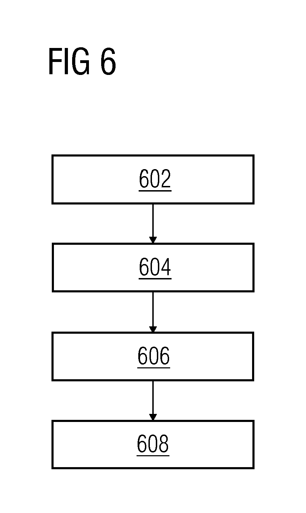

FIG 6 illustrates a method for dynamically configuring a host human-machine interface device in accordance with the present invention.

At step 602, the host human-machine interface device scans an automation system and identifies one or more remote human-machine interface devices. The list of discovered human-machine interface devices is suitably displayed to a user of the automation system. The user is prompted to select at least one remote human-machine interface device from the displayed list. In one example, the user may select multiple remote human-machine interface devices from the displayed list.

At step 604, one or more indicia corresponding to one or more logical control objects configured in the selected remote human-machine interface devices are displayed through the host human-machine interface device to the user of the automation system. The user is provide a user input for selecting one or more of the indicia, which is received and processed in the host human-machine interface device.

It should be noted that at this step, the user may select an individual graphical user interface from one or more graphical user interfaces configured in the selected remote human-machine interface device such that one or more indicia corresponding to one or more logical control objects therein are displayed.

At step 606, one or more configuration objects corresponding to one or more selected indicia are retrieved from the remote human-machine interface devices, wherein each configuration object comprises information related to a set of graphical and/or control properties of a corresponding logical control object.

At step 608, one or more logical control objects are instantiated on the host human-machine interface device based on the configuration objects retrieved from the remote human-machine interface devices.

In accordance with various techniques of the present invention, after such instantiation of the logical control objects, as explained above, the host human-machine interface device provides suitable graphical user interfaces permitting alteration in the set of graphical and/or control properties of the logical control objects in the host human-machine interface device based on a corresponding user input. Further, the host human-machine interface device provides suitable interfaces permitting deletion of one or more logical control objects based on a corresponding user input. These features have already been explained in detail in conjunction with the preceding figures.

As will now be well understood, the above techniques for dynamically configuring the host human-machine interface device 106 may be successively implemented with several remote human-machine interface devices 106. Hence, the user of the automation system 100 may select desired logical control objects from different remote human-machine interface devices and configure all those in the host human-machine interface device. Thus, the present invention provides an improved and much more efficient manner of monitoring and controlling multiple human-machine interface devices in the automation system 100.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A dynamically-configurable human-machine interface device (106) suitable for use in an automation system (100), said dynamically-configurable human-machine interface device (106) being communicatively coupled to at least one other human-machine interface device (106), said dynamically-configurable human-machine interface device (106) comprising:
- a designing module (202), said designing module (202) configured for displaying one or more indicia (404) corresponding to one or more logical control objects configured in said other human-machine interface device (106), and further configured for receiving a user input for selecting one or more of said indicia (404),
- a retrieving module (204), said retrieving module (204) configured for retrieving one or more configuration objects corresponding to one or more selected indicia (404) from said other human-machine interface device (106), wherein each configuration object comprises information related to a set of graphical and/or control properties of a corresponding logical control object, and
- a processing module (206), said processing module (206) configured for instantiating one or more logical control objects on said dynamically-configurable human-machine interface device (106) based on said configuration objects.

2. The dynamically-configurable human-machine interface device (106) according to claim 1, wherein said dynamically-configurable human-machine interface device (106) further comprises a discovery module (212), said discovery module (212) configured for scanning said automation system (100) and identifying said at least one other human-machine interface device (106).

3. The dynamically-configurable human-machine interface device (106) according to any of the preceding claims, wherein said designing module (202) comprises a set of designing interfaces (300, 400A, 400B, 400C) configured for selecting an individual human-machine interface device (106) from said at least one other human-machine interface device (106) and further selecting an individual graphical user interface (402) from one or more graphical user interfaces (402) configured in said individual human-machine interface device (106) based on corresponding user inputs such that one or more indicia (404) corresponding to one or more logical control objects therein are displayed in said designing interfaces (300, 400A, 400B, 400C).

4. The dynamically-configurable human-machine interface device (106) according to any of the preceding claims, wherein said designing module (202) is further configured for permitting alteration of said set of graphical and/or control properties of said logical control objects in said dynamically-configurable human-machine interface device (106) based on a corresponding user input.

5. The dynamically-configurable human-machine interface device (106) according to any of the preceding claims, wherein said designing module (202) is further configured for permitting deletion of one or more logical control objects based on a corresponding user input.

6. A method for dynamically configuring a human-machine interface device (106) suitable for use in an automation system (100), said human-machine interface device (106) being communicatively coupled to at least one other human-machine interface device (106), said method comprising:
- displaying (604) one or more indicia (404) corresponding to one or more logical control objects configured in said other human-machine interface device (106) on said dynamically-configurable human-machine interface device (106), and further receiving a user input for selecting one or more of said indicia (404),
- retrieving (606) one or more configuration objects corresponding to one or more selected indicia (404) from said other human-machine interface device (106), wherein each configuration object comprises information related to a set of graphical and/or control properties of a corresponding logical control object, and
- instantiating (608) one or more logical control objects on said human-machine interface device (106) based on said configuration objects.

7. The method according to claim 6 further comprising discovering (602) said at least one other human-machine interface device (106), wherein discovering comprises scanning said automation system (100) and identifying said at least one other human-machine interface device (106).

8. The method according to any of the preceding claims further comprising selecting an individual human-machine interface device (106) from said at least one other human-machine interface device (106) and further selecting an individual graphical user interface from one or more graphical user interfaces configured in said individual human-machine interface device (106) based on corresponding user inputs such that one or more indicia (404) corresponding to one or more logical control objects therein are displayed.

9. The method according to any of the preceding claims further comprising permitting alteration in said set of graphical and/or control properties of said logical control objects in said human-machine interface device (106) based on a corresponding user input.

10. The method according to any of the preceding claims further comprising permitting deletion of one or more logical control objects based on a corresponding user input.

11. An automation system (100) comprising a plurality of human-machine interface devices (106), said plurality of human-machine interface devices (106) comprising at least one dynamically-configurable human-machine interface device (106), said dynamically-configurable human-machine interface device (106) being in accordance with any of claims 1 through 5, and being operated in accordance with a method according to any of claims 6 through 10.
